# EUROPEAN PATENT SPECIFICATION

(11) **EP 3 632 667 B1**
(45) Date of publication and mention of the grant of the patent: **03.03.2021**
(21) Application number: 19200811.8
(22) Date of filing: 01.10.2019
(51) Int. Cl.: B29D 30/06, B60C 11/24, B29D 30/00

(54) **A METHOD OF MANUFACTURING A PNEUMATIC TIRE**
VERFAHREN ZUR HERSTELLUNG EINES LUFTREIFENS
PROCÉDÉ DE FABRICATION D'UN PNEUMATIQUE

(30) Priority: 05.10.2018 JP 2018190018
(43) Date of publication of application: 08.04.2020
(73) Proprietor: Sumitomo Rubber Industries, Ltd., Kobe-shi, Hyogo-ken 651-0072 (JP)
(72) Inventor: SETOKAWA, Hiroto, Kobe-shi, Hyogo 651-0072 (JP); OCHI, Jun, Kobe-shi, Hyogo 651-0072 (JP)
(74) Representative: Manitz Finsterwald Patent- und Rechtsanwaltspartnerschaft mbB

(56) References cited:
- WO-A1-2015/083072
- JP-A- 2003 214 808
- US-A1- 2009 078 347

## Description

### [TECHNICAL FIELD]

The present invention relates to a method of manufacturing a pneumatic tire that makes it possible to detect the wear state of a tread portion.

### [BACKGROUND ART]

In a pneumatic tire (hereinafter, also simply referred to as a "tire") mounted on a vehicle, a tread portion in contact with the ground wears as it travels, and a tread groove gradually becomes shallow. Then, if the depth of the tread groove becomes shallower than the wear limit, a slip may occur during traveling, which may increase the risk of causing an accident. For this reason, conventionally, it has been required that the wear amount of the tread portion is controlled so as not to exceed the wear limit, and when the wear limit is reached, the tire is replaced early to ensure safety during traveling.

As a method of checking the wear state of the tread portion, generally, a mark such as a slip sign is provided in the tread portion, and when this mark appears, it is determined that the wear amount has reached the wear limit. However, general users cannot be expected too much about the reliable check of this mark. So has been proposed a technology in which, instead of such visual confirmation by the user, the wear state of the tire is technically grasped and the user can accurately recognize that the replacement time has arrived.

For example, a tire wear limit detection device in which, based on a technique in which a conductive rubber member is casted into a tire to discharge static electricity in the tire to a road surface (for example, Patent document 1), magnetic pieces made of magnetic material or the like are embedded at places where wear becomes the wear limit, and, using a magnetic sensor or the like as a detection means, a detection target exposed due to wear is detected to detect that the tire is worn to the wear limit (for example, Patent document 2); and
a tire wear measurement method in which the wear state of the tire is measured by detecting a change in the strength of the magnetic field caused by a change in shape of the magnetic pieces embedded in the groove of tread or the inside of tire according to the wear of tread portion by using the detection means such as a magnetic sensor (for example, Patent document 3) have been developed.

### [PRIOR ART DOCUMENT]

### [PATENT DOCUMENT]

Patent document 1 : JP-A-2007-153092
Patent document 2 : JP-U-62-83704
Patent document 3 : JP-B-4054196

Patent document JP 2003 214808 A, discloses a magnetic body, which consists of a magnetic material, buried inside a tread part of a tyre, and which varies in field geometry/strength in relation to tyre wear.

### [SUMMARY OF THE INVENTION]

### [PROBLEMS TO BE SOLVED BY THE INVENTION]

However, the tire used in the tire wear limit detection device of Patent document 2 and in the tire wear measurement method of Patent document 3, the magnetic pieces embedded cause abnormal unevenness on the surface of the tire, and thus there is a problem that the ride comfort at the time of traveling decreases, when the tire is installed.

Therefore, it is an object of the present invention to provide a method of manufacturing a pneumatic tire that can be finished in a designed shape without causing occurrence of abnormal unevenness on the surface, even when magnetic pieces are embedded therein for detecting a worn state of the tire, and does not cause a reduction in ride comfort during traveling.

### [MEANS OF SOLVING THE PROBLEMS]

As a result of intensive studies to solve the above-mentioned problems, the present inventor has found that the above-mentioned problems can be solved by the invention described below, and has completed the present invention.

The invention according to claim 1 is;
a method of manufacturing a pneumatic tire provided with a magnetic portion containing powder particles of hard magnetic material in the tread portion, which comprises
a drilling step of drilling a hole in an unvulcanized tread portion forming member;
a magnetic piece embedding step of embedding a magnetic piece containing the powder particles of hard magnetic material in the hole as the magnetic portion;
a green tire molding step of molding a green tire using the tread portion forming member in which the magnetic piece is embedded; and
a vulcanizing step of vulcanizing the green tire.

The invention according to claim 2 is;
the method of manufacturing a pneumatic tire according to claim 1, wherein an unvulcanized or semi-vulcanized magnetic piece formed by dispersing the powder particles of hard magnetic material in a polymer material is used as the magnetic piece.

The invention according to claim 3 is;
the method of manufacturing a pneumatic tire according to claim 1 or 2, wherein a magnetic piece magnetized before being embedded in the hole is used as the magnetic piece.

The invention according to claim 4 is;
the method of manufacturing a pneumatic tire according to any one of claims 1 to 3, wherein
a cylindrical hole penetrating in the thickness direction of the tread portion forming member is formed as the hole; and
a magnetic piece corresponding to the cylindrical shape of the hole is used as the magnetic piece.

The invention according to claim 5 is;
the method of manufacturing a pneumatic tire according to any one of claims 1 to 4, wherein
ferrite-based magnetic powder is used as the powder particle of hard magnetic material; and
a magnetic piece formed by laminating a plurality of magnetic sheets formed by dispersing the powder particles of hard magnetic material in a polymer material is used as the magnetic piece.

The invention according to claim 6 is;
the method of manufacturing a pneumatic tire according to claim 5, wherein thickness of the magnetic sheet is 2 mm or less per sheet.

The invention according to claim 7 is;
the method of manufacturing a pneumatic tire according to any one of claims 1 to 4, wherein
a magnetic piece formed by laminating a magnetic layer formed by dispersing the powder particles of hard magnetic material in a polymer material and a nonmagnetic layer formed of the polymer material not containing the powder particles of hard magnetic material alternately multiple times is used as the magnetic piece.

The invention according to claim 8 is;
the method of manufacturing a pneumatic tire according to any one of claims 1 to 7, wherein
the tread portion of the pneumatic tire is provided with an inner layer portion which constitutes a portion on the tire inner circumferential side of the wear limit; and
a magnetic piece formed of the polymer material not containing the powder particles of hard magnetic material is used for forming the inner layer portion.

The invention according to claim 9 is;
the method of manufacturing a pneumatic tire according to any one of claims 1 to 8, which comprises
a magnetic sensor mounting step of mounting a magnetic sensor for detecting a magnetic flux density of a magnetic field formed by the magnetic piece on an inner surface of vulcanized pneumatic tire after the vulcanization step.

### [EFFECT OF THE INVENTION]

According to the present invention, even in the case of a tire having a magnetic piece embedded therein for detecting a worn state of the tire, the tire can be finished in a designed shape without causing the occurrence of abnormal irregularities on the surface, and a method of manufacturing a pneumatic tire not causing a reduction in ride comfort can be provided.

### [BRIEF DESCRIPTION OF THE DRAWINGS]

FIG. 1 is a cross-sectional view of a tire manufactured according to an embodiment of the present invention.
FIG. 2 is a schematic cross-sectional view showing an embedded portion of a magnetic piece of a tire manufactured according to an embodiment of the present invention.
FIG. 3 is a schematic view showing a configuration of a magnetic piece used in an embodiment of the present invention.
FIG. 4 is a schematic view showing a configuration of a magnetic piece used in another embodiment of the present invention.

### [EMBODIMENTS FOR CARRYING OUT THE INVENTION]

Hereinafter, the present invention will be described based on the embodiments with reference to the drawings.

### [1] Process leading to the present invention

As a result of examining the problem of a reduction in ride comfort caused in the conventional tire in which the magnetic piece is embedded, it has been found that since the magnetic piece is embedded by a post-processing on the vulcanized tire, the integrity of the magnetic piece and the tire is not sufficiently ensured, and the occurrence of abnormal irregularities is caused on the surface, which reduces the ride comfort during traveling.

Then, based on this finding, the inventor further studies and has come to a conception that, in order to ensure the integrity of the magnetic piece and the tire, the magnetic piece should not be embedded in the vulcanized tire by post processing, but the magnetic piece should be embedded in advance at the time of molding of the green tire, and this effect was confirmed as a result of the experiment.

Specifically, in the tire manufacturing step, a hole is provided in the unvulcanized tread portion forming member to be used, the magnetic piece is embedded in the provided hole, and the green tire having the tread portion forming member is vulcanized to produce a tire, thereby abnormal irregularities cannot be generated on the surface even in the case of a tire having a magnetic piece embedded therein, and the tire can be finished in a designed shape, and a pneumatic tire not leading to a reduction in ride comfort during traveling can be provided.

### [2] Manufacturing method of tire

### 1. Outline of the present embodiment

The method of manufacturing a tire according to the present embodiment comprises a drilling step, a magnetic piece embedding step, a green tire molding step and a vulcanizing step. The steps other than the drilling step and the magnetic piece embedding step are basically same as those of conventional method of manufacturing a tire. In addition, members having been used for manufacture of the conventional tire can be used similarly except the members indicated especially.

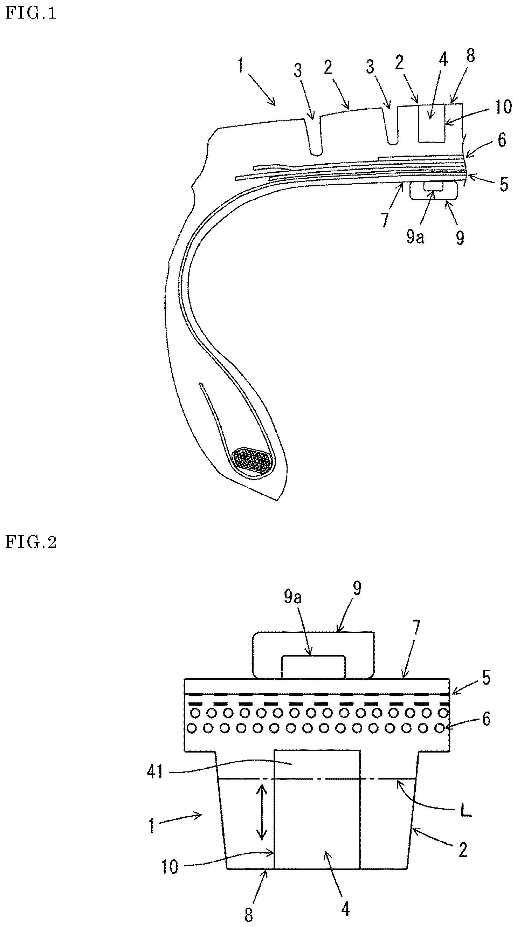

FIG. 1 is a cross-sectional view of a tire manufactured according to the present embodiment, and FIG. 2 is a schematic cross-sectional view showing an embedded portion of magnetic piece of the tire manufactured according to the present embodiment. In the tire manufacturing method of the present embodiment, the tire is manufactured through each of the steps of forming the hole 10 for embedding the magnetic piece 4 in the unvulcanized tread portion forming member (drilling step), embedding the magnetic piece 4 (magnetic piece embedding step), molding a green tire (green tire molding step), and conducting a vulcanization (vulcanizing step). Through these steps, the integrity of the magnetic piece and the tire is sufficiently ensured, and a tire free from the occurrence of abnormal irregularities can be finished in an orderly state.

### 2. Method of manufacturing a tire according to the present embodiment

Hereinafter, each step described above will be specifically described.

### (1) Drilling step

In the drilling step, a hole 10 for embedding the magnetic piece is made in a place where the magnetic piece is to be embedded in the unvulcanized tread portion forming member. The place where the magnetic piece is to be embedded can be appropriately set according to the size, type, etc. of the tire. For example, as shown in FIG. 1, it can be set at one location in the center of the width direction of the tire of the convex portion 2 surrounded by the concave portion 3 or at multiple locations at equal intervals in the circumferential direction of the tire. In FIG. 1, 5 indicates a carcass and 6 indicates a breaker.

As shown in FIG. 2, the hole 10 is drilled along the thickness direction of the tread portion forming member from the contact area 8 of the tread portion 1 to a depth exceeding the wear limit L of the tread portion 1. The wear limit L is a value determined by the national laws, regulations and the like. Specifically, in the case of tires for passenger cars, tires for light trucks and tires for truck buses, the height is set as 1.6 mm from the bottom of the main groove.

The shape of the hole 10 is not particularly limited as long as it is a shape corresponding to the magnetic piece 4 to be embedded, but a cylindrical hole penetrating in the thickness direction of the tread portion forming member is preferable, since the hole can be easily drilled by using a hole device with a bowler such as a cork borer. In accordance with this shape, it is preferable that the shape of the magnetic piece also correspond to the cylindrical shape of the hole. The depth of the hole 10 should be set to a depth exceeding the above-described wear limit L in consideration of detection of the wear limit by the magnetic piece 4 to be embedded therein.

### (2) Magnetic piece embedding step

Next, in the magnetic piece embedding step, as shown in FIG. 2, the magnetic piece 4 is inserted into the hole 10 provided in the previous step and embedded therein. In this embedding, as described above, it is preferable that the hole 10 and the magnetic piece 4 have a cylindrical shape, since they can be embedded easily and reliably as compared with combinations of a hole and a magnetic piece of other shapes.

The timing of the embedding is not particularly limited as long as it is before the molded tire is vulcanized, and may be before or after the green tire is molded.

### (3) Green tire molding step

Next, in the green tire molding step, the green tire is molded by a known method using the tread portion forming member in which the magnetic piece 4 is embedded and the other green tire molding members. Specifically, a green tire is molded by laminating a member for forming a tread portion and various members for molding green tire on a tire forming drum, as in the conventional step.

### (4) Vulcanizing step

In the vulcanizing step, a green tire molded in the preceding step is set in a vulcanizing mold and vulcanized by the same method as in the conventional method to produce a product tire. At this time, it is preferable that the magnetic piece 4 is positioned at the central portion of the convex portion 2 surrounded by the concave portion 3 in the width direction of the tire, and the position where the magnetic piece 4 is to be embedded is adjusted to be at the central portion of the concave portion for forming the convex portion 2 of the tread pattern cut into the vulcanized mold when setting the green tire in the vulcanization mold. Therefore, it is preferable to adjust the position of the magnetic piece 4 by marking the position of the magnetic piece at the time of formation of the tread portion forming member, or placing a magnetic sensor on the formed tread portion forming member to confirm the embedded position of the magnetic piece.

As described above, in the present embodiment, since the green tire is formed using the unvulcanized tread portion forming member in which the magnetic piece is embedded in advance, at the time of vulcanization, the magnetic piece and the tire are sufficiently integrated and the tire can be finished in an orderly state without occurrence of abnormal unevenness.

### 3. Magnetic piece

Next, the magnetic piece used in the present embodiment will be described. In the present embodiment, a commercially available product may be used as the magnetic piece, but it may be formed by itself.

A magnetic piece can be formed by dispersing powder particles of a hard magnetic material in a polymer material, and the obtained magnetic piece becomes a permanent magnet by magnetizing. Then, a predetermined magnetic flux density is formed around it and it is not easily demagnetized after the magnetization.

### (1) Powder particle of hard magnetic material

In the present embodiment, a magnetic powder for producing an alnico-based magnet containing aluminum, nickel, cobalt and iron as the main component, a ferrite-based magnet containing iron oxide as the main component, a samarium-based magnet containing samarium and iron as the main component or a neodymium-based magnet containing neodymium, iron and boron as the main component can be preferably mentioned as a powder particle of the hard magnetic material from the viewpoint that the coercivity after magnetization is large and it is not easily demagnetized.

Specifically, Al-Ni-Co-Fe-Cu and the like as an alnico magnet, Fe₂O₃-SrO and the like as a ferrite magnet, Sm-Co-Fe-Cu, Sm-Fe-N and the like as a samarium magnet and Nd-Fe-B-Dy, Nd-Fe-Nb-B and Nd-Pr-Fe-Nb-B and the like as a neodymium-based magnet can be mentioned as the examples.

Among them, ferrite-based magnetic materials are inexpensive, have a small particle size as compared with other hard magnetic materials, and are easily mixed with polymer materials. In addition, since the influence on mechanical properties is small as compared with other hard magnetic materials, it is suitable as a constituent material for a tread portion.

In addition, two or more types of the magnetic powders described above may be selected and used. For example, by mixing ferrite-based magnetic powder and samarium-based magnetic powder, or samarium-based magnetic powder and neodymium-based magnetic powder, a samarium/ferrite based magnetic piece or a samarium/neodymium based magnetic piece can be formed, respectively.

The particle diameter of the magnetic powder is preferably 400 µm or less, more preferably 250 µm or less, in consideration of the dispersibility to the polymer material in forming the magnetic piece and the abrasion associated with being a metal particle.

### (2) Polymer material

In the present embodiment, as a polymer material,
a resin material capable of exhibiting elasticity in a cured state or a rubber material is preferable from the viewpoint of sufficiently exhibiting the characteristics as a tire, and
a resin material or rubber material capable of exhibiting wear characteristics equivalent to those of a tread rubber composition after curing is preferable from the viewpoint of providing a stable ride comfort even when the magnetic piece formed by dispersing magnetic powders is worn like tread rubber. Specifically, for example, a rubber material having the same composition as the tread rubber composition used for the tread portion is preferable.

### (3) Formation of magnetic piece

As described above, the magnetic piece is preferably formed by dispersing the magnetic powders in a rubber material having the same composition as the tread rubber composition. For example, a part of the filler in the tread rubber composition may be substituted by the magnetic powder for formulating the rubber composition. The compounding amount of the magnetic powder in the magnetic piece 4 is preferably 10 to 70% by mass, more preferably 30 to 70% by mass, and still more preferably 40 to 70% by mass. When the compounding amount of the magnetic powder is set in this manner, an above-described magnetic field having the predetermined magnetic flux density is easily formed, and mechanical physical properties are easily obtained in which the embedded magnetic piece 4 sufficiently functions as a part of the tread portion 1.

The method of forming the magnetic piece 4 is not particularly limited as long as it is a method of forming into a predetermined shape and size using a material in which magnetic powder is dispersed in a polymer material. When the directions of magnetization of a large number of magnetic powders contained in the magnetic piece obtained is oriented in one direction, a magnetic field having the largest magnetic flux density can be formed, thereby obtaining a predetermined magnetic flux density while suppressing the compounding ratio of the magnetic powder to a lower level.

### (4) Inner layer

In the present embodiment, it is preferable that an inner layer portion 41 formed of a polymer material not containing the powder particles of hard magnetic material is provided in the deep portion of the magnetic piece 4, specifically, inside in the tire radial direction from the wear limit L.

By configuring the magnetic piece with the portion containing the powder particles and the portion not containing the powder particles in advance as described above, the end on the tire inner side of the portion containing the powder particles can be easily disposed at a desired position in the tire thickness direction and the manufacturing process of the magnetic piece 4 can be simplified. Therefore, for example, by arranging the tire inner side end of the portion containing the powder particles at a position corresponding to the wear limit L, when the tire wears to the wear limit L, since the portion containing the powder particles changes to a portion not containing powder particles, change amount of the magnetic flux density becomes relatively large, and it becomes easier to detect that the wear has reached the wear limit L.

### (5) Configuration of magnetic piece

In the present embodiment, the magnetic piece may be integrally formed as shown in the magnetic piece 4 in FIG. 2, but the magnetic piece is not limited to this and may be formed by laminating.

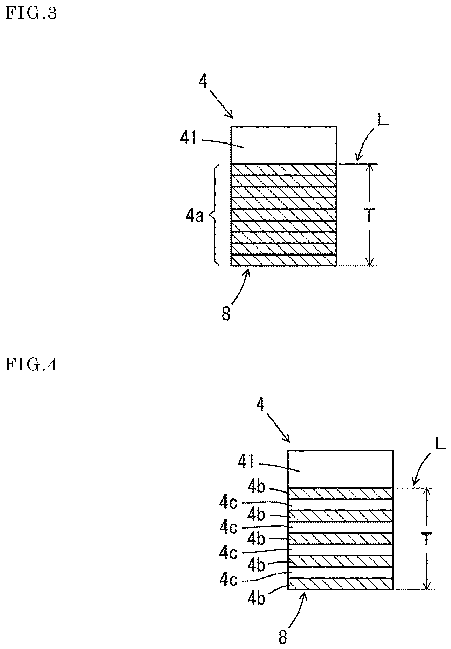

FIG. 3 and FIG. 4 are each a schematic view showing the configuration of the magnetic piece formed by laminating. FIG. 3 shows a magnetic piece of a magnetic sheets laminated type. FIG. 4 shows a magnetic piece of a magnetic layer and a nonmagnetic layer laminated type. In these magnetic pieces, the inner layer portion 41 is provided in the same manner as described above.

### (A) Magnetic sheets laminated type

In FIG. 3, 4a is a magnetic sheet containing powder particles of hard magnetic material (ferrite-based magnetic powder), and a magnetic piece 4 of thickness T is formed by laminating a plurality of magnetic sheets 4a. At this time, in order to uniformly orient the ferrite-based magnetic powder in the magnetic piece 4, it is preferable that the thickness per sheet does not exceed 2 mm, that is, 2 mm or less, and 1 mm or less is more preferable. On the other hand, when it is too thin, although it is preferable in terms of homogeneous orientation, it is necessary to laminate many sheet members to obtain a predetermined thickness T, and it becomes difficult to improve productivity. Therefore, 0.5 mm or more is preferable.

### (B) Magnetic layer and Nonmagnetic layer laminated type

In FIG. 4, 4b is a magnetic layer formed by dispersing powder particles of hard magnetic material in a polymer material, and 4c is a nonmagnetic layer formed of a polymer material not containing powder particles of hard magnetic material. The magnetic piece 4 of thickness T is configured by alternately laminating a plurality of magnetic layers 4b and nonmagnetic layers 4c.

By alternately laminating the magnetic layer 4b and the nonmagnetic layer 4c in this manner, the magnetic flux density changes stepwise at the boundary between the magnetic layer 4b and the nonmagnetic layer 4c. In the detection of wear, it becomes hard to receive the influence from external magnetic field and becomes easier to detect the amount of wear.

### (6) Magnetization

The formed magnetic piece 4 is magnetized. An installation used for the magnetization is not specifically limited. The magnetization can be carried out using a well-known magnetizing apparatus such as an air core coil system and a yoke system.

As the timing to magnetize, the magnetization can be carried out at any timing of before or after embedding the magnetic piece 4 in the tread portion forming member, or from after green tire molding to vulcanization, though it is preferable to carry out before embedding.

That is, when the magnetization is carried out before embedding, the object to be magnetized is only a magnetic piece having a small size, so an equipment of small size may be used and can be installed inexpensively. On the other hand, the tread portion forming member is large in size, and the molded green tire is further large in size, which requires a large-sized facility, requires a wide installation place, and increases the installation cost.

In the present embodiment, as the strength of the magnetic field formed by the magnetized magnetic piece 4, it is preferable to be a degree that the difference in the measured magnetic flux density is not affected by the geomagnetism, and the magnetic flux density can be reliably measured even under the influence of the magnetization and demagnetization by the steel cord provided inside the tire. On the other hand, it is preferable to be a degree that other electronic devices mounted in the vehicle are not adversely affected by the magnetic field and that the magnetic field does not adsorb metal pieces such as nails falling on the road surface when traveling on the road. Therefore, the magnetic piece 4 preferably has a magnetic flux density of 1 mT or more and 60 mT or less on the surface. The magnetic flux density on the surface of the magnetic piece 4 is a value measured by bringing a tesla meter into direct contact with the surface of the magnetized magnetic piece.

### (7) Pre-vulcanization

In the present embodiment, the magnetic piece 4 is preferably in an unvulcanized state or a semi-vulcanized state. In the case of the non-vulcanized magnetic piece 4, the magnetic piece 4 can be vulcanized and bonded to the periphery of the embedded portion in the vulcanization step, and the magnetic piece 4 can be integrated with the tread portion 1 and can be prevented from falling off during traveling.

On the other hand, in the case of the semi-vulcanized magnetic piece 4, the magnetic piece is relatively difficult to deform, and the flow deformation of the magnetic piece generated by being pressed against the mold in the vulcanization step is also less likely to occur. Vulcanization can be performed while forming a uniform shape in the thickness direction from the tread surface side to the vicinity of the breaker 6, and the change in magnetic flux density can be substantially stabilized.

In the above, "semi-vulcanized state" refers to a state in which the degree of vulcanization is higher than that in the non-vulcanized state but has not reached the degree of vulcanization required as the final product.

### (8) Embedding of magnetic piece

In the present embodiment, it is preferable to embed the magnetic piece 4 formed as described above in the tread portion 1 so that the difference in magnetic flux density to be detected is 1 mT or more between in a new state (unworn state) before the tread portion 1 is worn and in a state where the tread portion 1 is worn to the wear limit L. This makes it possible to reliably detect that the tire has worn to the wear limit.

### [3] Wear measurement

Next, wear measurement performed using the tire manufactured according to the present embodiment will be described.

### 1. Magnetic sensor installation

As shown in FIG. 1, in the tire manufactured according to the present embodiment, a magnetic piece 4 is embedded in the convex portion 2 of the tread portion 1, and a magnetic field is formed by the magnetic piece 4. As described above, since the magnetic piece 4 is formed by dispersing the powder particles of hard magnetic material in a polymer material, the magnetic piece 4 is worn according to the wear of the tread portion 1 as the vehicle travels, and, with the wear, the magnetic flux density of the magnetic field formed by the magnetic piece 4 changes. Therefore, the degree of wear of the tire can be known by detecting this changing magnetic flux density using a magnetic sensor.

The magnetic sensor may be provided on the vehicle body side, for example, in a tire house, but in this case, the magnetic body (magnetic piece) may be detected only when the magnetic body provided on the rotating tire side approaches the detection means, and only intermittent measurement can be carried out. In addition, since the positional relationship between the magnetic sensor and the magnetic body is easily changed due to the inclination of the vehicle body, the condition of the road surface during traveling, the air pressure of the tire, etc,, the strength of the magnetic field cannot be measured stably and accurately.

Therefore, in the present embodiment, it is preferable to provide a magnetic sensor mounting step after the above-mentioned vulcanization step and attach a magnetic sensor 9a that detects the magnetic flux density of the magnetic field formed by the magnetic piece 4 on the inner surface 7 of the tire as shown in FIG. 1.

Thus, by disposing the magnetic sensor 9a on the inner surface 7 of the tire, the magnetic flux density can be detected continuously without interruption. As a result, the wear state of the tire mounted on the vehicle can be grasped over time. By using such a tire, the positional relationship between the magnetic sensor 9a and the magnetic piece 4 can be kept constant even when being affected by the inclination of the vehicle body, the condition of the road surface during traveling, the air pressure of the tire, etc., thereby the magnetic flux density can be stably and accurately measured, and the wear state of the tire can be grasped with high accuracy.

At this time, when the magnetic piece 4 is magnetized in the tire radial direction, in the case that the magnetic sensor 9a is installed on the tire radial direction of the magnetic piece 4, the magnetic flux density can be detected with high sensitivity. For this reason, the magnetic sensor 9a is preferably installed on the inner surface 7 of the tire in the tire radial direction of the magnetic piece 4.

The magnetic sensor 9a has a small size that can be attached to the inner surface 7 of the tire, and a Hall element, a magnetoresistance element (MR), a magnetoimpedance (MI) element and the like, that can sufficiently withstand vibration and deformation of the rotating tire, can be mentioned preferably as the magnetic sensor. Among these, a magnetoresistance element with high measurement accuracy is more preferable. Also, it is preferable to use a magnetic sensor which can measure a magnetic flux density difference of 1 mT or more so that both the unworn state of the magnetic piece 4 and the remaining state when the tread portion 1 is worn to the wear limit can be measured properly. That is, it is preferable that the effective measurement range of the magnetic flux density in a magnetic sensor is 1 mT or more.

In the present embodiment, in addition to the magnetic sensor 9a, it is preferable that the sensor module 9 is similarly disposed on the tire. The sensor module 9 is configured to be housed with a receiver that receives data detected by the magnetic sensor 9a, a transmitter that transmits the received data to the wear state determination device provided in the vehicle body in a wired or wireless manner, an antenna associated therewith, a power supply, and the like in a housing. The sensor module 9 may be installed integrally with the magnetic sensor 9a or may be installed separately.

The sensor module 9 may be housed together with a pressure sensor for detecting the internal pressure of the tire, a temperature sensor for measuring the temperature, an acceleration sensor for detecting the acceleration, and the like, in addition to the magnetic sensor 9a. By using the sensor mentioned above, the internal pressure of the tire, the temperature of the tire, acceleration data and the like can be acquired in real time in addition to the magnetic flux density. Then, by comprehensively analyzing each data acquired by the plurality of sensors, the state of the tire can be grasped in more detail, which may be used effectively for automatic driving control of a vehicle expected in the future.

Further, the sensor module 9 is not limited to the configuration as described above, and may be configured to further have a storage unit that stores data for comparison indicating the relationship between the amount of wear and the magnetic flux density, a wear state determination unit that determines the wear state of the tread based on the magnetic flux density detected by the magnetic sensor 9a using the data for comparison stored in the storage unit, and the transmission unit transmits the determination result to the wear state display device provided in the vehicle body.

As a method of attaching the sensor module 9 to the tire, for example, a method of attaching to a socket provided on the inner surface 7 of the tire, a method of directly adhering to the inner surface 7, a method of embedding in the tire, and the like can be adopted as appropriate. Among them, the method of attaching to the socket is particularly preferable because of easy attachment and replacement.

### 2. Measurement of wear state

Hereinafter, measurement of a wear state of the tire in which the magnetic sensor 9a is attached to the inner surface 7 of the tire as described above will be described.

### (1) Advance data acquisition

In the present embodiment, in order to measure and determine the state of wear, data indicating the relationship between the magnetic flux density and the state of wear is used. This data is acquired in advance by manufacturing a test sample of the same type as the measurement object and measuring the relationship between the magnetic flux density and the wear state, and the obtained data is sent to the wear state determination device or the wear state determination unit.

Specifically, first, the magnetic flux density in a new tire immediately after production (the same type of tire to be measured) is measured, and thereafter, wearing this tire is carried out using a tire abrasion drum tester until wear of this tire exceeds the wear limit. Then, the device is stopped at predetermined time intervals during the process, and the amount of wear and magnetic flux density at that time are measured.

Thereafter, based on the measured amount of wear and magnetic flux density, data for comparison indicating the relationship between the amount of wear and magnetic flux density is created, and the created data is stored in the wear state determination device or the wear state determination unit provided in the vehicle body.

### (2) Mounting the tire to be measured on a real vehicle and traveling

Next, the tire to be measured is mounted to a real vehicle and traveled. By traveling, the magnetic body is worn along with the tread portion, so that the magnetic flux density detected by the magnetic sensor changes.

And, by comparing the change of the magnetic flux density measured by the magnetic sensor with the data for comparison stored in advance in the wear state determination device, to what extent the wear is progressing in the tire to be measured can be determined.

In the measurement of magnetic flux density, the influence of change (disturbance) of magnetic flux density generated by external magnetic field change etc. is considered. However, since these influences appear as large changes, unlike the above magnetic flux density change which changes gradually with wear of a tire which progresses gradually, and these disturbances can be eliminated by applying statistical processing.

Although the present invention was explained based on an embodiment, the present invention is not limited to the above-mentioned embodiment. Various modifications can be made to the above embodiment within the same and equivalent scope of the present invention, which is defined by the appended claimes.

### [DESCRIPTION OF THE REFERENCE NUMERALS]

- 1: tread portion
- 2: convex portion
- 3: concave portion
- 4: magnetic piece
- 4a: magnetic sheet
- 4b: magnetic layer
- 4c: nonmagnetic layer
- 5: carcass
- 6: breaker
- 7: inner surface
- 8: contact area
- 9: sensor module
- 9a: magnetic sensor
- 10: hole
- 41: inner layer portion
- L: wear limit
- T: thickness (of magnetic piece)

## Claims

1. A method of manufacturing a pneumatic tire provided with a magnetic portion containing powder particles of hard magnetic material in the tread portion which comprises
a drilling step of drilling a hole in an unvulcanized tread portion forming member;
**characterised by** a magnetic piece embedding step of embedding a magnetic piece containing the powder particles of hard magnetic material in the hole as the magnetic portion;
a green tire molding step of molding a green tire using the tread portion forming member in which the magnetic piece is embedded; and
a vulcanizing step of vulcanizing the green tire.

2. The method of manufacturing a pneumatic tire according to claim 1, **characterized in that** an unvulcanized or semi-vulcanized magnetic piece formed by dispersing the powder particles of hard magnetic material in a polymer material is used as the magnetic piece.

3. The method of manufacturing a pneumatic tire according to claim 1 or 2, **characterized in that** a magnetic piece magnetized before being embedded in the hole is used as the magnetic piece.

4. The method of manufacturing a pneumatic tire according to any one of claims 1 to 3, **characterized in that**
a cylindrical hole penetrating in the thickness direction of the tread portion forming member is formed as the hole; and
a magnetic piece corresponding to the cylindrical shape of the hole is used as the magnetic piece.

5. The method of manufacturing a pneumatic tire according to any one of claims 1 to 4, **characterized in that**
ferrite-based magnetic powder is used as the powder particle of hard magnetic material; and
a magnetic piece formed by laminating a plurality of magnetic sheets formed by dispersing the powder particles of hard magnetic material in a polymer material is used as the magnetic piece.

6. The method of manufacturing a pneumatic tire according to claim 5, **characterized in that** thickness of the magnetic sheet is 2 mm or less per sheet.

7. The method of manufacturing a pneumatic tire according to any one of claims 1 to 4, **characterized in that**
a magnetic piece formed by laminating a magnetic layer formed by dispersing the powder particles of hard magnetic material in a polymer material and a nonmagnetic layer formed of the polymer material not containing the powder particles of hard magnetic material alternately multiple times is used as the magnetic piece.

8. The method of manufacturing a pneumatic tire according to any one of claims 1 to 7, **characterized in that**
the tread portion of the pneumatic tire is provided with an inner layer portion which constitutes a portion on the tire inner circumferential side of the wear limit; and
a magnetic piece formed of the polymer material not containing the powder particles of hard magnetic material is used for forming the inner layer portion.

9. the method of manufacturing a pneumatic tire according to any one of claims 1 to 8, which comprises
a magnetic sensor mounting step of mounting a magnetic sensor for detecting a magnetic flux density of a magnetic field formed by the magnetic piece on an inner surface of vulcanized pneumatic tire after the vulcanization step.

## Patentansprüche

1. Verfahren zum Herstellen eines Luftreifens, der mit einem Magnetabschnitt, der Pulverteilchen aus hartmagnetischem Material enthält, in dem Laufflächenabschnitt versehen ist, umfassend
einen Bohrschritt eines Bohrens eines Lochs in ein einen unvulkanisierten Laufflächenabschnitt bildendes Element;
einen Magnetstück-Einbettungsschritt eines Einbettens eines Magnetstücks, das die Pulverteilchen aus hartmagnetischem Material enthält, in das Loch als den Magnetabschnitt;
einen Rohreifen-Formungsschritt eines Formens eines Rohreifens unter Verwendung des den Laufflächenabschnitt bildenden Elements, in das das Magnetstück eingebettet ist; und
einen Vulkanisierschritt eines Vulkanisierens des Rohreifens.

2. Verfahren zum Herstellen eines Luftreifens nach Anspruch 1, **dadurch gekennzeichnet, dass** ein unvulkanisiertes oder halbvulkanisiertes Magnetstück, das durch Dispergieren der Pulverteilchen aus hartmagnetischem Material in einem Polymermaterial gebildet wird, als das Magnetstück verwendet wird.

3. Verfahren zum Herstellen eines Luftreifens nach Anspruch 1 oder 2, **dadurch gekennzeichnet, dass** ein Magnetstück, das magnetisiert wird, bevor es in das Loch eingebettet wird, als das Magnetstück verwendet wird.

4. Verfahren zum Herstellen eines Luftreifens nach einem der Ansprüche 1 bis 3, **dadurch gekennzeichnet, dass**
ein zylindrisches Loch, das in der Dickenrichtung des den Laufflächenabschnitt bildenden Elements eindringt, als das Loch ausgebildet wird; und
ein Magnetstück, das der zylindrischen Form der Bohrung entspricht, als das Magnetstück verwendet wird.

5. Verfahren zum Herstellen eines Luftreifens nach einem der Ansprüche 1 bis 4, **dadurch gekennzeichnet, dass**
Magnetpulver auf Ferritbasis als das Pulverteilchen des hartmagnetischen Materials verwendet wird; und
ein Magnetstück, das durch Laminieren einer Vielzahl von Magnetbahnen gebildet wird, die durch Dispergieren der Pulverteilchen des hartmagnetischen Materials in einem Polymermaterial gebildet werden, als das Magnetstück verwendet wird.

6. Verfahren zum Herstellen eines Luftreifens nach Anspruch 5, **dadurch gekennzeichnet, dass** die Dicke der Magnetbahn 2 mm oder weniger pro Bahn beträgt.

7. Verfahren zum Herstellen eines Luftreifens nach einem der Ansprüche 1 bis 4, **dadurch gekennzeichnet, dass**
ein Magnetstück, das durch mehrfaches abwechselndes Laminieren einer magnetischen Schicht, die durch Dispergieren der Pulverteilchen aus hartmagnetischem Material in einem Polymermaterial gebildet wird, und einer nichtmagnetischen Schicht, die aus dem Polymermaterial gebildet wird, das die Pulverteilchen aus hartmagnetischem Material nicht enthält, gebildet wird, als das Magnetstück verwendet wird.

8. Verfahren zum Herstellen eines Luftreifens nach einem der Ansprüche 1 bis 7, **dadurch gekennzeichnet, dass**
der Laufflächenabschnitt des Luftreifens mit einem inneren Schichtabschnitt versehen ist, der einen Abschnitt an der Reifeninnenumfangsseite der Verschleißgrenze bildet; und
ein aus dem Polymermaterial gebildetes Magnetstück, das die Pulverteilchen aus hartmagnetischem Material nicht enthält, zum Bilden des inneren Schichtabschnitts verwendet wird.

9. Verfahren zum Herstellen eines Luftreifens nach einem der Ansprüche 1 bis 8, der umfasst
einen Magnetsensor-Montageschritt eines Montierens eines Magnetsensors zum Erfassen einer magnetischen Flussdichte eines Magnetfeldes, das durch das Magnetstück an einer Innenfläche des vulkanisierten Luftreifens nach dem Vulkanisierschritt gebildet wird.

## Revendications

1. Procédé de fabrication d'un bandage pneumatique doté d'une portion magnétique contenant des particules de poudre constituées d'un matériau magnétique dur dans la portion formant bande de roulement, qui comprend :
une étape de perçage consistant à percer un trou dans un élément de formage de portion formant bande de roulement non vulcanisé ;
**caractérisé par**
une étape d'intégration de pièce magnétique consistant à intégrer dans le trou une pièce magnétique contenant les particules de poudre constituées d'un matériau magnétique dur à titre de portion magnétique ;
une étape de moulage de pneumatique vert consistant à mouler un pneumatique vert en utilisant l'élément de formage de portion formant bande de roulement dans laquelle la pièce magnétique est intégrée, et
une étape de vulcanisation consistant à vulcaniser le pneumatique vert.

2. Procédé de fabrication d'un bandage pneumatique selon la revendication 1, **caractérisé en ce qu'**une pièce magnétique non vulcanisée ou semi-vulcanisée, formée en dispersant dans un matériau polymère les particules de poudre constituées d'un matériau magnétique dur, est utilisée à titre de pièce magnétique.

3. Procédé de fabrication d'un bandage pneumatique selon la revendication 1 ou 2, **caractérisé en ce qu'**une pièce magnétique magnétisée avant d'être intégrée dans le trou est utilisée à titre de pièce magnétique.

4. Procédé de fabrication d'un bandage pneumatique selon l'une quelconque des revendications 1 à 3, **caractérisé en ce que** un trou cylindrique pénétrant dans la direction de l'épaisseur de l'élément formant la portion formant bande de roulement est formé à titre de trou; et une pièce magnétique correspondant à la forme cylindrique du trou est utilisée à titre de pièce magnétique.

5. Procédé de fabrication d'un bandage pneumatique selon l'une quelconque des revendications 1 à 4, **caractérisé en ce que** une poudre magnétique à base de ferrite est utilisée à titre de particules de poudre constituées de matériau magnétique dur ; et
une pièce magnétique formée en stratifiant une pluralité de feuilles magnétiques formées en dispersant dans un matériau polymère les particules de poudre constituées d'un matériau magnétique dur est utilisée à titre de pièce magnétique.

6. Procédé de fabrication d'un bandage pneumatique selon la revendication 5, **caractérisé en ce que** l'épaisseur de la feuille magnétique est de 2 mm ou moins par feuille.

7. Procédé de fabrication d'un bandage pneumatique selon l'une quelconque des revendications 1 à 4, **caractérisé en ce que** une pièce magnétique formée en stratifiant, en alternance plusieurs fois, une couche magnétique formée en dispersant dans un matériau polymère les particules de poudre constituées de matériau magnétique dur et une couche non magnétique formée du matériau polymère qui ne contient pas les particules de poudre constituées d'un matériau magnétique dur est utilisée à titre de pièce magnétique.

8. Procédé de fabrication d'un bandage pneumatique selon l'une quelconque des revendications 1 à 7, **caractérisé en ce que** la portion formant bande de roulement du bandage pneumatique est dotée d'une portion formant couche intérieure qui constitue une portion sur le côté circonférentiel intérieur du pneumatique de la limite d'usure ; et
une pièce magnétique formée sur le matériau polymère qui ne contient pas les particules de poudre constituées d'un matériau magnétique dur est utilisée pour former la portion formant couche intérieure.

9. Procédé de fabrication d'un bandage pneumatique selon l'une quelconque des revendications 1 à 8, qui comprend
une étape de montage de capteur magnétique consistant à monter un capteur magnétique destiné à détecter une densité de flux magnétique d'un champ magnétique formé par la pièce magnétique sur une surface intérieure du bandage pneumatique vulcanisé après l'étape de vulcanisation.
